**Europäisches Patentamt**

(19) **European Patent Office**

**Office européen des brevets**

(11) Publication number: **0 163 126**

**A1**

(12) # EUROPEAN PATENT APPLICATION

(21) Application number: **85104999.9**

(51) Int. Cl.⁴: **F 04 D 13/06**

(22) Date of filing: **25.04.85**

(30) Priority: **02.05.84 IT 2075484**

(43) Date of publication of application:
**04.12.85 Bulletin 85/49**

(84) Designated Contracting States:
**BE CH DE FR GB LI NL SE**

(71) Applicant: **Pompe Ing. Calella S.p.A.**
**Via Garibaldi no 13**
**I-21022 Azzate Varese(IT)**

(72) Inventor: **Calella, Sigismondo**
**Via Erbamolle no 12**
**I-21020 Buguggiate Varese(IT)**

(74) Representative: **Coloberti, Luigi**
**Via E. de Amicis No. 25**
**I-20123 Milano(IT)**

(54) **Electric pumping device.**

(57) A submerged electric pump, an agitator or the like, of the type comprising a chamber (10) containing an impeller (11) connected to an electric drive motor (16, 17), said chamber (10) being provided with an axial inlet (7) for the liquid to be pumped, and a peripheral outlet (12) for the pumped liquid, in which the opposing surfaces of the stator (17) and of the rotor (16) of the control motor are provided with a protective coating (26, 27) and in which a path is provided inside the motor for the forced circulation of a lubricating and cooling fluid in the annular space (28) defined between the protective coatings (26, 27) of the rotor (16) and of the stator (17), and through the rotor supports.

./...

Croydon Printing Company Ltd

Fig. 3

## Electric pumping device

This invention concerns a submerged type of pumping device, and in particular, a new type of centrifugal pump, hydraulic agitator or the like, for pumping any type of liquid whatsoever, for example, aggressive chemicals and/or containing solid substances, in which the electric motor has been suitably protected and cooled in order to permit a totally submerged and adequately protected disposition of the drive motor itself.

For lifting, transferring and, in general, for pumping liquids also containing solid substances, such as waste water, rain water, sewage and other liquids, from underground containers, cisterns or tanks situated below a work surface, centrifugal pumps are normally used which substantially comprise a centrifugal impeller rotating in a chamber provided with an axial inlet for the liquid to be pumped and a lateral outlet, said impeller being mechanically connected to an electric control motor.

For certain applications, only the pumping element is immersed in the liquid whilst the electric motor is positioned outside, with its control shaft extending towards the impeller of the pump inside a long protective metal tube. For other applications, use is made of totally submerged pumping devices, which are those of particular interest for this invention, in which both the impeller and the electric control motor, the latter being provided with suitable sealing means, are totally immersed in the liquid to be pumped.

The pumps of the previously mentioned types, besides being very expensive or excessively bulky and, therefore, difficult to install, have the great disadvantage resulting from the possible flooding of the electric motor in the event of damage to the sealing parts, and in particular to the hydraulic seal which is normally provided in correspondence with the thrust bearings between the electric motor and the impeller. These bearings must, in fact, be scrupulously isolated from the pumped liquid which could cause their corrosion or give rise to deposits of scale, resulting in faulty functioning or blocking of the motor. The sealing system is therefore of the utmost importance for the proper functioning of the pump as well as the need for constant and accurate maintenance.

Even though they have proved suitable for pumping even very dirty liquids, pumps of this type have not however proved satisfactory for use in pumping or conveying corrosive liquids, or for being totally submerged in liquids such as acids or the like, which are capable of damaging the pump itself.

Consequently, a scope of this invention is to provide a centrifugal pumping device, capable of overcoming the aforementioned problems, which is suitable for pumping both corrosive and non-corrosive liquids, even containing solid substances, in which special and complicated sealing systems for protecting the electric motor have been eliminated, by the use of suitable protective coatings for the stator and the rotor, simultaneously defining part of a hydraulic path for the forced circulation of a lubricating and cooling liquid. The lubricating and cooling liquid, according to the circumstances, may be pumped liquid itself, or a separate liquid such as water or other liquids.

All this is achieved by means of an electric pumping device as specified in claim 1.

Several embodiments of the electric pumping device, according to this invention, will be illustrated hereunder with reference to the accompanying drawings, in which:

Fig. 1 shows a longitudinal cross-sectional view of a first embodiment, in which the cooling liquid consists of the pumped liquid itself;

Fig. 2 shows a longitudinal cross-sectional view of a second embodiment, in which the cooling liquid can either be the pumped liquid or an outside liquid which mixes with the pumped liquid itself;

Fig. 3 shows a longitudinal cross-sectional view of a third embodiment, in which the cooling liquid is a separate liquid which does not mix with the pumped liquid.

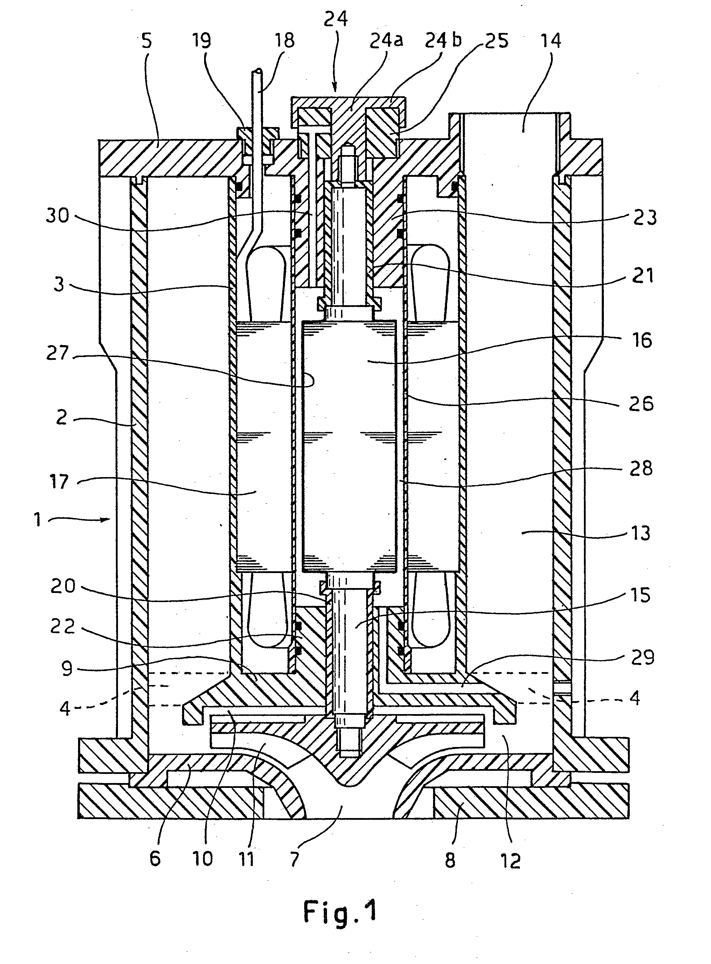

With reference to figure 1, a first embodiment will now be described, in which the cooling and lubricating liquid consists of the pumped fluid itself, whenever the latter does not contain foreign substances in suspension, or to such a limited degree as not to endanger the bearings of the elec-

0163126

tric motor, and in which the cooling liquid flows out from the pump itself.

As shown, the pump comprises a casing 1, provided with an external cylindrical wall 2, an internal cylindrical wall 3, spaced apart from and secured to the latter by means of arms 4, shown in dotted lines in the figure, an upper cover 5 and a lower cover 6 defining an axial inlet 7 for the intake of the liquid to be pumped; the lower cover 6, in the case shown, is held between the lower edge of the external wall of the casing and a ring 8 screwed or otherwise secured to the casing 1.

Between the lower cover 6 and the closing end base 9 of the internal cylindrical wall 3, is a chamber 10 for a pumping impeller 11, said chamber 10 communicating centrally with the axial inlet 7 and opening peripherally through a circumferential passage 12, into an annular chamber 13 defined between the external wall 2 and the internal wall 3 of the casing 1. Reference 14 indicates an outlet in the chamber 13 for discharging the pumped liquid.

The impeller 11 of the pump is directly connected, without interposition of sealing elements, to the lower end of the shaft 15 of an electric motor situated inside the housing defined by the internal cylindrical wall 3 and the relative end base 9. In particular, reference 16 indicates the rotor of the motor, and reference 17 indicates the stator with the relative electric winding fed by means of a cable 18 which passes through a sealing element 19 in the upper cover 5 of the casing.

Two sleeves 20, 21 completely cover the two ends of the shaft 15 protruding on either side of the rotor; said sleeves 20, 21 rotate in hubs 22 and 23 firmly secured to the end base 9 of the motor housing and respectively to the upper cover 5 of the casing.

From figure 1, it can be seen moreover, that the rotor 16 of the motor has been suitably suspended in order to withstand both the weight of the rotor itself and the downward thrust generated by the pumped liquid, on the impeller 11. In order to completely eliminate the use of complicated bearing systems, the upper end of the shaft 15 of the rotor is suspended from a mushroom-shaped supporting element 24 provided with a central stem 24a to which the shaft 15 of the rotor is secured, and a head 24b which rests on a ring 25 made with a low friction material, and supported in an appropriate seating in the upper cover 5 of the casing.

As mentioned previously, in the pumping device according to this invention, the intermediate seals between the chamber 10 of the impeller and the electric motor have been completely eliminated; consequently, in order to ensure the necessary electrical insulation and, in any case, the protection of the stator and the rotor against the action of the pumped liquid which is partly made to circulate in the air gap between the rotor and the stator, as well as through the sleeves 20, 21 protecting the shaft and the hubs 22, 23, in order to create the necessary lubrication and the internal cooling of the motor, as explained further on, in this connection the opposing surfaces both of the stator 17 and of the rotor 16 have been provided with a suitable protective coating 26 and 27, defining a sort of jacket made of waterproof and corrosion-proof material compatible with the type of liquid pumped or made to circulate.

The electric motor 16, 17, with the exception of the protective coatings 26 and 27, is a normal electric motor for pumps of the aforementioned kind, the air gap of which has been suitably increased in order to make room for the protective coating of the rotor and of the stator which partially overlaps the sleeves 20, 21 of the rotor shaft, in order to offer total protection.

In view of the larger dimensions of the air gap, and due also to the presence of the protective coatings 26 and 27, the motor is subject to greater losses and, therefore, to greater overheating which calls for the need to suitably dissipate the heat which is generated inside the motor. Part of the heat of the stator is dispelled through the internal wall 3 which surrounds the stator 17, towards the pumped liquid which flows into and fills the annular chamber 13 which completely surrounds the motor, whilst part of the heat which would tend to accumulate in the rotor 16 is dispelled by means of a cooling liquid. In the specific case, the cooling is obtained by part of the pumped liquid itself, which is made to circulate by the pressure inside the annular chamber 13 along a branched-off path, comprising the annular space 28 along the air gap of the motor, delimited by the opposing protective coatings 26, 27 of the rotor and of the stator, a duct 29 connecting the inside of the stator and the chamber under pressure 13, at a point close to the peripheral outlet 12 of the chamber 10 of the impeller, and a second duct 30 which connects the inside of the stator with the outside, at a point close to the upper support 24 of the rotor, so that the cooling liquid flows out from the pump and is again dispersed into the liquid to be pumped.

By making the support 24, or the hubs 22, 23 and the sleeves 20, 21 protecting the rotor shaft, with suitable tolerances, or with suitable passages, the cooling liquid circulating through the branched-off path 28, 29, 30, also filters between the opposing surfaces of the support 24, 25 of the hubs 22, 23 and of the protective sleeves 20, 21, thereby permitting suitable lubrication of the contacting surfaces, and then flowing back into the liquid to be pumped.

Both the casing 1 of the pumping device and the various protective coatings can be made from any type of suitable material, in particular, from plastic material capable of withstanding acids and corrosive agents contained in the liquid to be pumped; for example, Polyvinylidenfluoride can be used, or chlorofluoridated polymers having the necessary characteristics of chemical resistance and impermeableness to the fluid with which they are to come into contact. In particular, the protective coatings 26, 27 both of the stator and of the rotor, can be preformed or applied by any known technique, for example by spraying or by heat-shrinking a film or tubular coating placed on the surfaces to be protected. The coating of the rotor and of the stator can be of any thickness whatsoever, for example, it can vary from a few microns to approximately one millimetre, according to requirements, and must be of such a kind as not to impede the diffusion of the electromagnetic field between the rotor and the stator, whilst permitting the total insulation of the electrical parts from the pumped liquid, thereby avoiding all the problems which occurred in the known pumping devices.

All the other parts of the pumping device according to the invention which are destined to come directly or indirectly into contact with the liquid to be pumped, must also be suitably protected or made from materials which are resistant to the action of the fluid itself; in particular, the rotor supporting device may be made with a supporting element 24 made of corrosion-proof metal, such as stainless steel or Ni-Cr-MO or titanium alloy steel, in which the bearing ring 25 is made from low friction material, such as polytetrafluorethylene (PTFE) or its compounds, graphite or other suitable material.

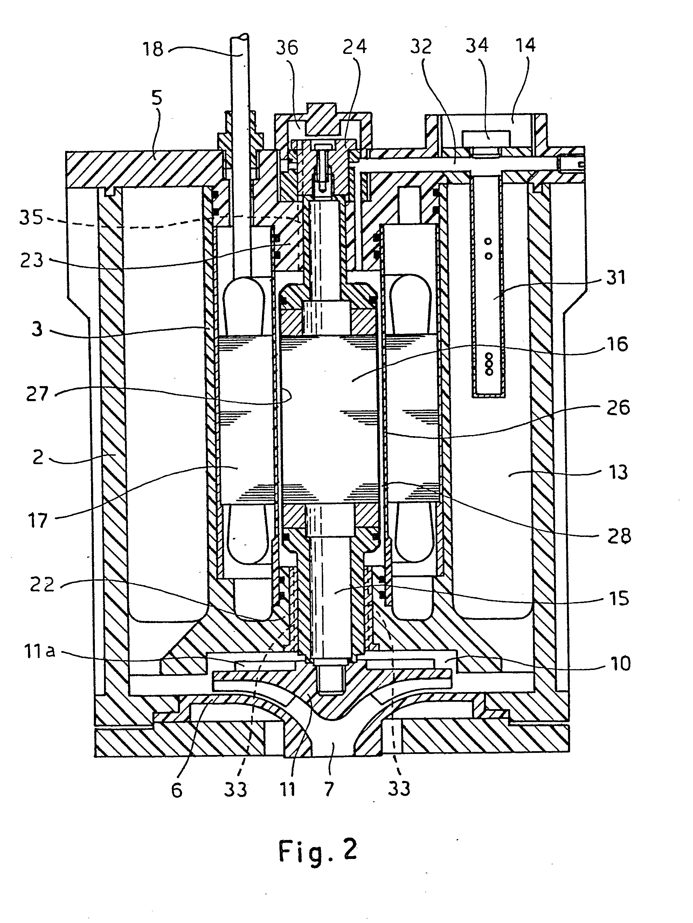

Figure 2 of the drawings shows a different embodiment of the pumping device, which also makes use of the pumped liquid as a means for cooling the inside of the motor and for lubricating the bearings. The pumping device is composed in a substantially similar way to that of the previous figure and, consequently, identical numerical refer-

- 9 -

0163126

ences have been used for indicating similar or equivalent parts.

The pumping device of figure 2 proves to be particularly suitable whenever the pumped liquid contains substances in suspension which could damage the rotor bearings, and must consequently be filtered; moreover, the device of figure 2 exploits not only the pressure of the pumped fluid existing in the chamber under pressure 13 surrounding the motor, but also the vacuum which is created on the rear part of the impeller 11, to achieve a greater circulation of lubricating and cooling liquid.

Consequently, unlike the previous case, the branched-off path for circulation of the cooling liquid, in figure 2, closes or makes inside the pumping device itself and comprises a filter 3 inside the annular chamber 13, connected to a transversal duct 32 close to the pump outlet 14, which extends into the upper hub 23 and opens out on the inside of the stator 17. The branched-off path comprises moreover the annular space of the gap 28, and longitudinal channels 33 in correspondence with the lower hub 22, which open out into the chamber 10 of the impeller on the rear side of the impeller 11 itself where a vacuum effect is generated by means of the rear fins 11a. Consequently, unlike the case of figure 1, where the cooling liquid circulated upwards from below, flowed from the pump and then returned to the liquid to be pumped, in the case of figure 2 the cooling liquid inside the motor circulates in the opposite direction, downward from above, along an internal circuit which is open in the direction of the pumped liquid, and in order to circulate, exploits both the pressure existing inside the chamber 13 and the vacuum effect on the rear side of the impeller 11, as mentioned previously.

In the case illustrated in figure 2, the cooling and lubricating liquid is therefore made up of a part of the pumped fluid itself. However, an external liquid could also be used, for example, water fed by means of appropriate conduit, not shown, connected to a fitting in the duct 32 which, in figure 2, is closed by the screw cap 34; in this case, the filter 31 must obviously be eliminated and the hole for connecting the filter must be closed by means of a plug. According to this embodiment as well, the cooling water would also circulate in the opposite direction to the pumped fluid, mixing together with the pumped fluid itself inside the chamber 10 of the impeller.

Lastly, in figure 2, reference 35 indicates channels which lead off from the inside of the stator to a chamber 36 above the element 24 supporting the rotor, for lubrication.

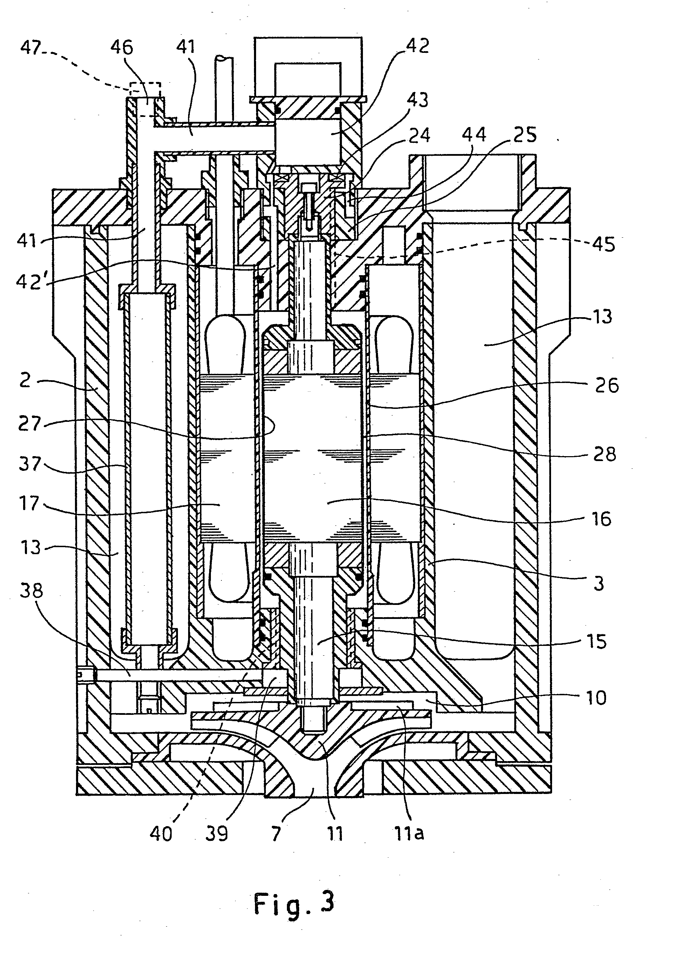

A further embodiment is shown in the example in figure 3. Here too, the pumping device is substantially composed, in exactly the same way as in the pumping devices of the previous figures, except for the internal cooling circuit; consequently, the same numerical references have been used to indicate similar or equivalent parts.

Unlike the previous cases, in the example in figure 3, the

0163126

cooling and lubrication is carried out with a different liquid to the pumped one, which does not mix with the latter due to the fact that it is made to circulate along a path inside the pumping device itself. In particular, the cooling liquid circuit for the inside of the motor comprises a heat exchanger 37, immersed in the pumped liquid of the annular chamber 13, through which the cooling liquid circulates in the opposite direction to the pumped liquid. The heat exchanger 37 is substantially composed of a metal tube, resistant to the possible corrosive action of the pumped liquid; said tube being connected from below, on one side, to a duct 38 which leads to an annular chamber 39 close to the lower end of the rotor shaft 15, and from this chamber, towards the inside of the stator, by means of one or more ducts 40 in the lower hub; whereas, on the upper end the tube 37 of the heat exchanger is connected, by means of a duct 41, to a chamber 42 into which flows the cooling liquid which is made to circulate by suitable means, for example, by means of a small supplementary impeller 43 integral with, or secured to, the upper end of the rotor support 24, and which sucks from the inside of the stator, through the duct 42' in the hub. The chamber 44 of the supplementary impeller surrounds and extends axially over most of the ring 25 supporting the rotor, as shown, and communicates with the inside of the stator by means of one or more ducts 45, in the upper hub, for the necessary lubrication.

The duct 41 of the described cooling circuit, in the case in which it is necessary to periodically compensate any possible loss of liquid, may be provided with a fitting 46, which can be closed by means of a removable plug 47, and which can be connected to an external source of cooling liquid, for example, to the water mains, if such fluid is water.

It will be clear, from what has been described and shown in the various examples illustrated, that this invention concerns a pumping device, capable of acting as an actual pump for transferring or circulating fluids, or as a simple hydraulic agitator by providing, in such case, radial outlet holes in place of the outlet aperture 14 for the pumped liquid; in all cases, it is obvious however that the innovation consists in a pumping device provided with an internal circuit for lubricating and cooling the motor and in which jackets or protective coatings are provided for the surfaces exposed to contact with the liquid, on the rotor and on the stator, along the entire air gap and on the rotor shaft, which permit total immersion of the entire pumping device in the liquid to be pumped, without danger of the liquid invading or damaging the electrical parts of the motor or corroding or damaging the motor itself.

0163126

Claims

1. Electric pumping device comprising a casing (1) defining a chamber (10) for an impeller (11) connected to the rotor (16) of an electric control motor, said chamber (10) of the impeller being provided with an axial inlet (7) for a liquid to be pumped and respectively a peripheral outlet (12) for the pumped liquid, characterized by the fact that the opposing surfaces of the rotor (16) and of the stator (17) of the electric motor are provided with a protective coating (26, 27) which adheres tightly to the aforesaid surfaces, and by the fact that a path is provided for the circulation of a cooling liquid inside the motor, comprising the annular space (28) of the gap delimited by the protective coatings (26, 27) of the rotor (16) and of the stator (17).

2. Pumping device as claimed in claim 1, characterized by the fact that the cooling liquid is the pumped liquid itself and by the fact that said path for the circulation of the cooling liquid is connected between the delivery side (13) of the pumping device, at a point close to the peripheral outlet (12) of the chamber (10) of the impeller, and a point outside the pumping device itself, through ducts (29, 30) which pass through hubs (22, 23) of the devices supporting the rotor shaft (15).

3. Pumping device as claimed in claim 1, characterized by the fact that the cooling liquid is the pumped liquid itself, and by the fact that said path for circulation of the cooling liquid is connected to the delivery side (13) between a point close to the end of the rotor (13) opposite to the impeller (11), and the chamber (10) of the impeller (11) itself, by means of ducts (32, 33) which pass through the supporting devices of the rotor shaft (15).

4. Pumping device as claimed in any of the previous claims, characterized by the fact that said cooling liquid circulation path comprises a filter (31).

5. Pumping device as claimed in claim 1, characterized by the fact that the cooling liquid is a different liquid from the pumping liquid, and by the fact that the circulation path for the cooling liquid is connected to an external source.

6. Pumping device as claimed in claim 1, characterized by the fact that the cooling liquid is a different liquid from the liquid to be pumped; and by the fact that the cooling liquid path is made up of an internal circuit (28, 42', 42, 41, 37, 38, 39, 40).

7. Pumping device as claimed in claim 6, characterized by the fact that said circuit comprises a heat exchanger 37 which is lapped by the pumped liquid, inside an annular chamber surrounding the motor.

8. Pumping device as claimed in any of the claims from 1 to 7, characterized by the fact that supplementary means (11a, 43) are provided to circulate the cooling liquid along the path inside the motor.

9.   Pumping device as claimed in claim 8, characterized by the fact that said means for circulating the cooling liquid comprise supplementary fins (11a) situated on the rear part of the pumping impeller (11).

10.   Device as claimed in claim 8, characterized by the fact that said means for circulating the cooling liquid comprise a supplementary impeller (43) connected to the upper support (24) of the rotor shaft (15).

11.   Pumping device as claimed in any of the claims from 1 to 10, characterized by the fact that the casing (1) is made of plastic material and comprises an external cylindrical wall (2), an internal cylindrical wall (3) radially spaced apart from the first, a first and a second cover (5, 6) at both ends of the casing, said internal wall (3) being provided with a lower end bottom (9) defining the housing for the electric control motor (16, 17), and by the fact that the aforesaid external (2) and internal (3) walls define an annular chamber (13) which surrounds the housing of the motor, said annular chamber (13) being connected to the chamber (10) of the impeller and respectively to an outlet (14) for the pumped fluid.

0163126

Fig.1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 243 617 (HERMETIC)<br>* Page 5, lines 1-5 and line 18 - page 6, line 5, lines 24-32; page 12, line 32 - page 13, line 5; figure 1 * | 1,2 | F 04 D 13/06 |
| Y | | 3,5-9, 11 | |
| X | DE-B-1 093 211 (FOSTORIA)<br>* Column 1, lines 1-3; column 2, lines 36-41 and line 51 - column 3, line 50; figures 1-4 * | 1,4 | |
| X | CH-A- 305 818 (BAYER)<br>* Page 1, lines 1-31, 45-56; page 2, lines 3-11; figure * | 1 | |
| X | THE SAE JOURNAL, vol. 74, no. 5, May 1966, pages 44-47, New York, US; F.D. GAYLORD et al.: "Motors that don't mind sea water"<br>* Page 47, column 2, line 5 - end of page * | 1 | TECHNICAL FIELDS SEARCHED (Int. Cl.4)<br><br>F 04 D |
| X | GB-A-1 320 841 (YOSHIDA)<br>* Page 1, lines 54-58; page 2, lines 1-16; page 3, lines 33-40, 65-76; page 4, lines 6-37; figure 1 * | 1 | |

-/-

The present search report has been drawn up for all claims

| Place of search | Date of completion of the search | Examiner |
|---|---|---|
| THE HAGUE | 12-08-1985 | WALVOORT B.W. |

European Patent
Office

**EUROPEAN SEARCH REPORT**

0163126

EP 85 10 4999

Page 2

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | US-A-2 887 062 (CAMETTI) <br> * Column 1, lines 49-56; column 3, lines 36-47; column 4, lines 27-48; column 7, lines 21-72; figures 1,1A * | 1,6 | |
| Y | US-A-3 652 186 (CARTER) <br> * Column 2, lines 32-35; column 4, lines 3-24; column 5, lines 30-65; figures 1,3,4,6 * | 3,8,9 | |
| A | | 4 | |
| Y | FR-A-1 583 533 (BORG-WARNER) <br> * Page 1, lines 1-3; page 23, line 8 - page 24, line 17; figures 2,3,9 * | 5 | |
| Y | DE-B-1 030 441 (RITZ & SCHWEIZER) <br> * Column 1, lines 1-7; column 3, lines 25-53; figure * | 6,7 | TECHNICAL FIELDS SEARCHED (Int. Cl.4) |
| A | GB-A- 410 322 (MORAN) <br> * Page 1, lines 15-19, 95-101; figure 1 * | 7 | |
| A | CH-A- 268 275 (TYLER) <br> * Page 1, lines 1-6; page 2, lines 50-68; figure 1 * | 8,10 | |
| | --- -/- | | |

The present search report has been drawn up for all claims

| Place of search <br> THE HAGUE | Date of completion of the search <br> 12-08-1985 | Examiner <br> WALVOORT B.W. |
|---|---|---|

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | US-A-2 885 963 (IVANOFF) <br> * Column 1, lines 16-17; column 3, lines 19-34; figure 1 * | 10 | |
| A | FR-A-1 134 136 (WESTINGHOUSE) <br> * Page 1, column 1, lines 1-5; page 3, column 2, lines 2-12; figures 1-3 * | 10 | |
| Y | DE-A-2 243 027 (RENNERODER) <br> * Page 1, lines 1-2; page 2, line 1 - page 3, line 3; claim 1; figures * | 11 | |
| A | US-A-3 507 582 (JEEP) <br> * Column 1, lines 44-49; column 2, lines 23-31; figures 2,3,7 * | 11 | |
| A | US-A-4 013 383 (RULE) <br> * Column 2, lines 3-17; column 6, lines 23-37; figure 1 * | 11 | TECHNICAL FIELDS SEARCHED (Int. Cl.4) |

The present search report has been drawn up for all claims

| Place of search | Date of completion of the search | Examiner |
|---|---|---|
| THE HAGUE | 12-08-1985 | WALVOORT B.W. |